(19) **Europäisches Patentamt / European Patent Office / Office européen des brevets**

(11) **EP 2 941 549 B1**

(12) **FASCICULE DE BREVET EUROPEEN**

(45) Date de publication et mention
de la délivrance du brevet:
**08.02.2017 Bulletin 2017/06**

(51) Int Cl.:
*F01N 3/035* (2006.01)     *F01N 3/10* (2006.01)
*F01N 13/02* (2010.01)

(21) Numéro de dépôt: **13820817.8**

(22) Date de dépôt: **17.12.2013**

(86) Numéro de dépôt international:
**PCT/FR2013/053138**

(87) Numéro de publication internationale:
**WO 2014/106703 (10.07.2014 Gazette 2014/28)**

(54) **SYSTEME DE POST-TRAITEMENT DE GAZ D'ECHAPPEMENT**

SYSTEM ZUR ABGASNACHBEHANDLUNG

SYSTEM FOR THE POST-TREATMENT OF EXHAUST GASES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.01.2013 FR 1350112**

(43) Date de publication de la demande:
**11.11.2015 Bulletin 2015/46**

(73) Titulaire: **Peugeot Citroën Automobiles SA
78140 Vélizy Villacoublay (FR)**

(72) Inventeurs:
• **MATTHESS, Nils
F-92300 Levallois Perret (FR)**
• **LESUEUR, Jean-Nicolas
F-91370 Verrières le Buisson (FR)**

(56) Documents cités:
**EP-A1- 1 323 905    EP-A1- 2 072 774
FR-A1- 2 918 113**

**Description**

L'invention porte sur un système de post-traitement de gaz d'échappement qui équipe une ligne d'échappement d'un véhicule automobile. Elle a aussi pour objet une telle ligne d'échappement, ainsi que le véhicule incluant cette ligne.

Le document EP - 2,072,774 décrit un moteur à combustion interne pourvu d'une ligne d'échappement pour évacuer vers un environnement extérieur des gaz d'échappement produits par le moteur à combustion interne. Le moteur du véhicule est susceptible d'admettre un mélange air/carburant autour de la stoechiométrie ou enrichi en carburant. La ligne d'échappement est équipée d'un système de post-traitement des gaz d'échappement pour éviter un rejet de composants nocifs, contenus à l'intérieur des gaz d'échappement, vers l'environnement extérieur. Ledit système comprend un dispositif principal de catalyse trois-voies convertissant les polluants émis par le moteur suite à la combustion d'un mélange air/carburant stoechiométrique qui est placé en amont d'un dispositif aval de catalyse, selon un sens d'écoulement des gaz d'échappement à l'intérieur de la ligne d'échappement. Une arrivée d'air est ménagée entre le dispositif amont de catalyse trois-voies et le dispositif aval de catalyse, de telle sorte que le dispositif aval de catalyse admet un mélange air/carburant aval qui comprend un excès d'air par rapport à un mélange air/carburant amont admis à l'intérieur du dispositif amont de catalyse trois-voies. Dans ce système, le dispositif aval de catalyse est préférentiellement un catalyseur d'oxydation, ou bien un filtre à particules catalytique, voire un convertisseur catalytique trois-voies. L'arrivée d'air est en relation avec un conduit d'air qui s'étend entre l'arrivée d'air et une prise d'air ménagée sur un conduit d'alimentation en air du moteur à combustion interne. Le conduit d'air est équipé d'une valve de contrôle pour autoriser ou interdire une injection d'air depuis la prise d'air vers l'arrivée d'air. Une injection d'air à travers l'entrée d'air vise à permettre une conversion de monoxyde carbone CO et d'hydrocarbures imbrulés HC à l'intérieur du dispositif aval de catalyse.

Un tel système de post-traitement s'avère encombrant, lourd et complexe, notamment en raison de la présence du conduit d'air et d'une pompe à air qui équipe ce dernier. De plus, un tel système de post-traitement requiert un diagnostic de fonctionnement fréquent ce qui est contraignant et source de perte de temps.

Par ailleurs, et d'une manière générale, un tel système de post-traitement mérite d'être amélioré, notamment lorsqu'un mélange air/carburant admis à l'intérieur du moteur à combustion interne est enrichi en carburant. Un tel enrichissement est fréquemment nécessaire pour répondre à des sollicitations en mode transitoire du moteur à combustion interne lors d'une demande de fortes charges lors de phases d'accélération par exemple. Un tel enrichissement est aussi fréquemment nécessaire pour diminuer le plus possible une température des gaz d'échappement afin de protéger des éléments présents à l'échappement, tels que des soupapes, des collecteurs, des sondes de gaz, des catalyseurs, des filtres ou analogues. De même lorsque le moteur est fortement sollicité (besoin de puissance pour une accélération, par exemple), il est nécessaire de recourir à du " surenrichissement ".

De telles phases d'enrichissement ont pour conséquence de rendre les gaz d'échappement réducteurs, i.e. riches en monoxyde de carbone (CO) et surtout en hydrocarbures imbrûlés (HC). Ils ne contiennent alors plus suffisamment d'espèces oxydantes ($O_2$ et NOx notamment) pour réaliser de manière satisfaisante les réactions catalytiques de conversion des polluants dans les systèmes de post-traitement.

Qu'il s'agisse de protéger les composants ou d'offrir de la puissance au conducteur, ces surenrichissements moteur conduisent à des surrichesses en carburant dans le système de dépollution.

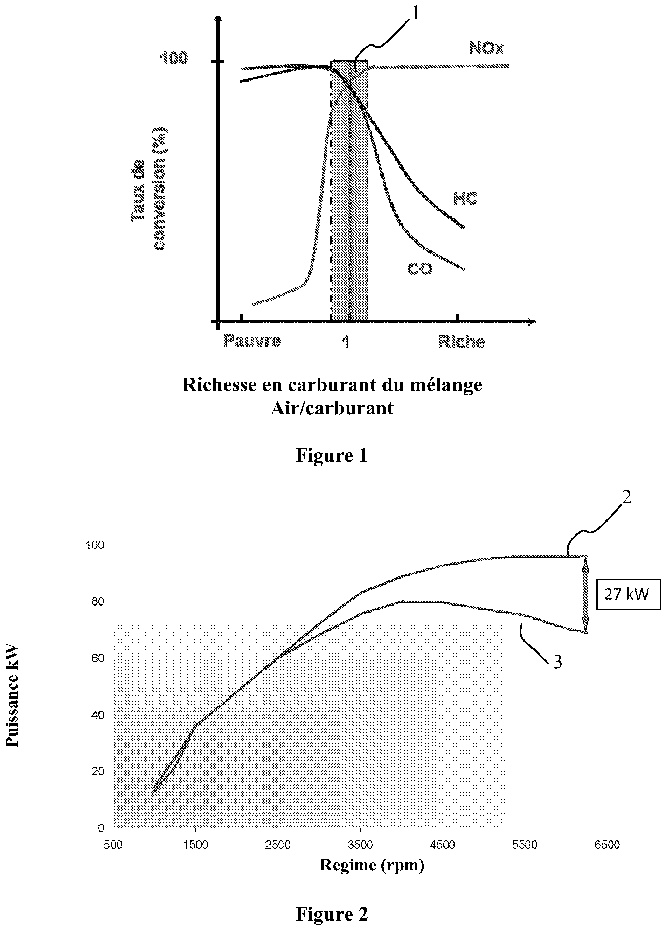

Or, un dispositif catalytique de conversion des polluants émis par le moteur utilisé dans les systèmes existants, tel qu'un catalyseur « trois-voies », ne fonctionne correctement que dans une fenêtre étroite de richesse autour de la stoechiométrie (autant d'espèces oxydantes que d'espèces réductrices) telle que repérée par 1 sur la figure 1 et donc de manière beaucoup moins efficace en milieu riche où le carburant est en excès.

En effet, lorsque les conditions de richesse sont optimales c'est-à-dire lorsque le mélange air/carburant est stoechiométrique (fenêtre 1 de la figure 1), les deux réactions d'élimination du monoxyde de carbone et des hydrocarbures imbrûlés par l'$O_2$ des gaz d'échappement sont efficaces :

(1) $CO + \frac{1}{2}O_2 \rightarrow CO_2$
(2) $C_xH_y + (x+y/4)O_2 \rightarrow xCO_2 + y/2H_2O$

Mais en milieu riche i.e. en excès de carburant par rapport à la quantité d'air, ces réactions d'oxydation du monoxyde de carbone (1) et des hydrocarbures imbrûlés (2) ne sont pas aussi efficaces qu'en milieu pauvre où l'oxygène est en excès dans le catalyseur.

Des émissions de CO et surtout d'HC non traitées peuvent donc apparaître dans ces conditions à la canule échappement.

Or les règlementations relatives aux émissions polluantes et les nouveaux cycles d'homologation deviennent de plus en plus sévères et rendent cette problématique encore plus importante que par le passé.

Bien entendu, il est toujours possible de réduire les températures dans la chambre de combustion mais ceci a pour conséquence de limiter également la performance des moteurs, ce qui n'est jamais souhaitable. En effet, tel que l'illustre la figure 2, on remarque que lorsque le mélange air/carburant est stoechiométrique (courbe 3), et que c'est la température de la chambre de combustion qui est réduite pour protéger les composants, les performances du moteur sont très inférieures à celles obtenues lorsque le mélange est enrichi pour protéger les composants (courbe 2).

Un but de la présente invention est de proposer un système de post-traitement de gaz d'échappement produits par un moteur à combustion interne d'un véhicule automobile, le système de post-traitement équipant une ligne d'échappement en relation avec le moteur à combustion interne, le système de post-traitement étant apte à oxyder des composants nocifs, monoxyde de carbone CO et hydrocarbures imbrulés HC, préalablement à leur rejet vers un environnement extérieur au véhicule automobile, notamment dans des conditions de fonctionnement du moteur à combustion interne imposant un enrichissement en carburant d'un mélange air/carburant admis à l'intérieur du moteur à combustion interne, un tel système de post-traitement étant peu encombrant, léger et simple à réaliser.

Un autre but de la présente invention est de proposer un tel système de post-traitement qui évite d'avoir à abaisser la température des gaz d'échappement ce qui a pour conséquence un abaissement d'une performance du moteur à combustion interne, ce qu'il est préférable d'éviter, tout en présentant une meilleure efficacité pour convertir les hydrocarbures lorsque le mélange air/carburant admis dans le moteur est en excès de carburant.

A cet effet, l'invention concerne un système de post-traitement de gaz d'échappement destiné à équiper une ligne d'échappement d'un moteur à combustion interne dont est pourvu un véhicule automobile, le moteur du véhicule étant susceptible d'admettre un mélange air/carburant stoechiométrique ou enrichi en carburant, le système comprenant un dispositif catalytique principal de conversion des polluants émis par le moteur suite à la combustion d'un mélange air/carburant autour de la stoechiométrie.

Selon l'invention, le système comprend un dispositif catalytique additionnel de conversion des hydrocarbures (HC) imbrûlés suite à la combustion d'un mélange air/carburant enrichi en carburant, ainsi qu'une unité de gestion de la température de ce dispositif additionnel en fonction de son état de vieillissement, portant la température de ce dispositif additionnel à une température supérieure à une température d'efficacité optimale fonction de son état de vieillissement.

Avantageusement, mais facultativement, le système selon l'invention comprend au moins l'une des caractéristiques suivantes :

- le dispositif additionnel et le dispositif principal sont formés respectivement par deux catalyseurs distincts l'un de l'autre comprenant respectivement des phases actives catalytiques différentes l'une de l'autre,

- le dispositif additionnel et le dispositif principal sont respectivement formés par deux zones distinctes d'un même catalyseur monobloc et solidaire comprenant respectivement des phases actives catalytiques différentes l'une de l'autre,

- le dispositif additionnel comprend une phase active catalytique enduite sur un filtre à particules,

- la phase active du dispositif additionnel comprend un composant comprenant du rhodium ou un bi-métallique Pt-Rh sur un support réductible,

- la phase active du dispositif additionnel comprend un composant $Pt-Rh/Al_2O_3-CeO_x$,

- l'unité de gestion de la température du dispositif additionnel comprend des outils de mesure de la température courante du dispositif additionnel, une base de données mettant en correspondance l'état de vieillissement du dispositif additionnel avec une température d'efficacité optimale, et une gestion thermique de la ligne d'échappement du véhicule apte à augmenter la température courante du dispositif additionnel si cette température courante est inférieure à la température d'efficacité optimale, et

- un deuxième dispositif catalytique additionnel de conversion du monoxyde de carbone.

L'invention concerne également une ligne d'échappement équipant un moteur à combustion interne dont est pourvu un véhicule automobile, comprenant un système de post-traitement tel que décrit ci-dessus, le dispositif additionnel de ce système étant disposé en aval du dispositif principal selon le sens de cheminement des gaz émis par le moteur vers la sortie de la ligne d'échappement.

Enfin, l'invention concerne également un véhicule automobile comprenant un moteur à combustion interne de type essence susceptible d'admettre un mélange air/carburant autour de la stoechiométrie ou enrichi en carburant, le moteur formant l'unique moyen de motorisation du véhicule, ou un moyen de motorisation complémentaire d'un moteur autre que thermique, dans lequel les gaz émis par le moteur suite à la combustion du mélange air/carburant sont véhiculés vers l'extérieur à travers la ligne d'échappement telle que définie précédemment.

D'autres caractéristiques et avantages de la présente invention apparaîtront à la lecture de la description qui va suivre basée sur différents exemples de réalisation de l'invention, en relation avec les figures des planches annexées, dans lesquelles :

- la figure 1 représente l'efficacité de conversion d'un catalyseur trois-voies vis-à-vis des polluants CO (monoxyde de carbone), HC et $NO_x$ (oxydes d'azote) en fonction de la richesse des gaz d'admission du moteur à une température à laquelle la conversion est maximale, et mettant en évidence l'existence d'une « fenêtre » d'efficacité optimale du catalyseur trois-voies,

- la figure 2 illustre deux courbes de puissance d'un moteur thermique essence en fonction de son régime, obtenues respectivement : avec un mélange air/carburant enrichi en carburant (courbe 2) et avec un mélange air/carburant stoechiométrique (courbe 3),

- la figure 3 représente l'efficacité de la conversion des HC (courbe en traits pleins) et du CO (courbe en traits pointillés) en fonction de la température des gaz d'admission, pour un catalyseur d'un état de vieillissement donné, obtenu par des essais réalisés au banc gaz synthétiques sous un mélange réactionnel de type $C_3H_6$ (3600ppmC1)/CO(1.05%)/$H_2O$(10%)/$N_2$

- la figure 4 montre de façon schématique l'évolution des concentrations d'hydrocarbures imbrûlés, de NO (monoxyde d'azote) et de CO en fonction de la richesse du mélange d'admission air/carburant,

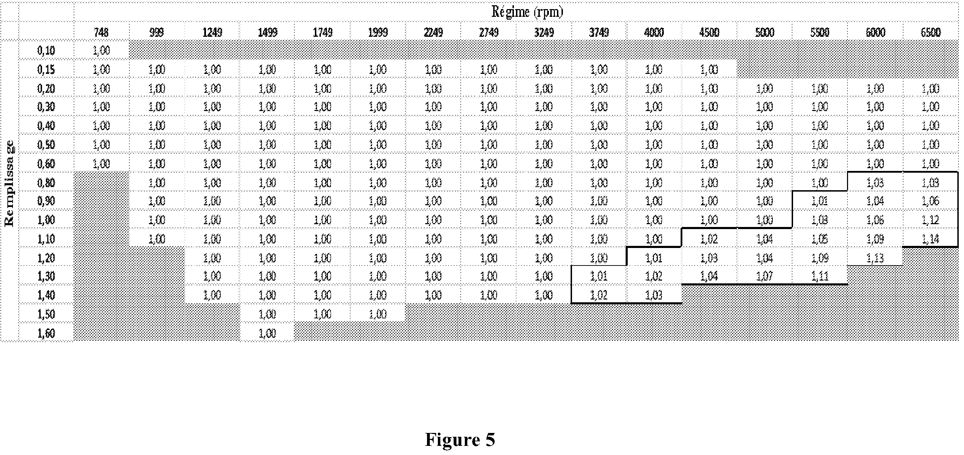

- la figure 5 est un tableau représentant un exemple de zone de surenrichissement moteur mise en évidence par l'encart en traits épais où le coefficient de richesse du mélange d'admission est supérieur à 1, ce tableau représentant le remplissage moteur en fonction du régime moteur,

- les figures 6 à 8 représentent des variantes de réalisation d'un système de post-traitement de la présente invention équipant une ligne d'échappement d'un véhicule automobile.

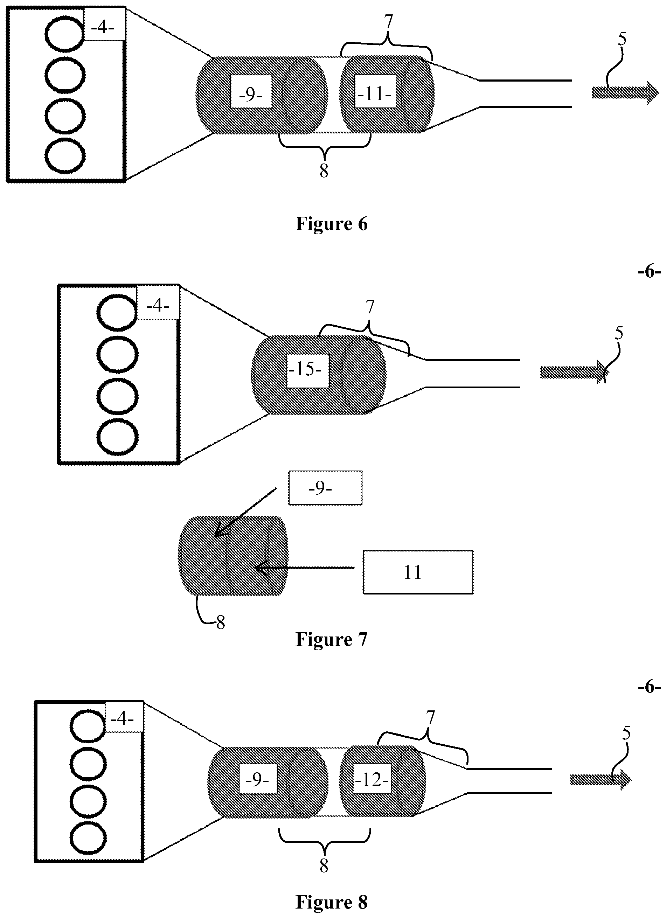

Sur les figures 6 à 8, un moteur à combustion interne 4 équipe un véhicule automobile pour permettre un déplacement de ce dernier. Le moteur à combustion interne 4 est indifféremment le seul moyen de propulsion du véhicule automobile ou bien est constitutif d'un moteur hybride. Le moteur à combustion interne 4 est préférentiellement un moteur thermique à allumage commandé dit moteur essence fonctionnant généralement avec un mélange air/carburant stoechiométrique ou autour de la stoechiométrie. Le moteur à combustion interne 4 produit des gaz d'échappement 5 qui sont évacués vers un environnement extérieur 6 par l'intermédiaire d'une ligne d'échappement 7 dont est pourvu le moteur à combustion interne 4.

Les gaz d'échappement 5 contiennent des composants nocifs qu'il est nécessaire de convertir préalablement à leur rejet vers l'environnement extérieur 6.

A cet effet, la ligne d'échappement 7 est équipée d'un système de post-traitement 8 des gaz d'échappement 5 qui comprend un dispositif catalytique principal 9 de conversion des polluants émis par le moteur dans des conditions de fonctionnement normal, c'est-à-dire avec un mélange air/carburant autour de la stoechiométrie ou stoechiométrique.

Plus précisément, le dispositif catalytique principal 9 est formé par un catalyseur trois-voies qui est à même de réaliser à la fois l'oxydation du monoxyde de carbone CO, des hydrocarbures imbrûlés HC et la réduction des oxydes d'azote $NO_x$. Ce dispositif est le système de post-traitement des émissions gazeuses polluantes réglementées des moteurs à essence. Pour être efficace et réaliser l'ensemble des réactions catalytiques dont les principales sont représentées ci-après (numérotées de 1 à 8), le dispositif catalytique principal a besoin d'être porté à une température élevée, dite température d'amorçage (souvent supérieure à 250°C), de conditions de richesse de gaz bien spécifiques, les conditions de richesse étant favorables lorsque le coefficient de richesse R est proche de 1.

Ce dernier point est illustré par la figure 1 montrant l'efficacité de conversion des polluants CO, HC et NOx en fonction de la richesse des gaz à une température où la conversion est maximale.

Ci-après les principales réactions rencontrées en catalyse « trois-voies » :

(1) $CO + ½O_2 \rightarrow CO_2$
(2) $C_xH_y + (x+(y/4))O_2 \rightarrow xCO_2 + y/2H_2O$
(3) $CO + H_2O \rightarrow CO_2 + H_2$
(4) $C_xH_y + 2xH_2O \rightarrow xCO_2 + (2x+y/2)H_2$
(5) $H_2 + ½O_2 \rightarrow H_2O$
(6) $NO + CO \rightarrow ½N_2 + CO_2$
(7) $NO + H_2 \rightarrow ½N_2 + H_2O$
(8) $C_xH_y + (2x+(y/2))NO \rightarrow (x+(y/4))N_2 + y/2H_2O + xCO_2$

Le système de post-traitement 8 et/ou le moteur à combustion interne 4 comprennent des éléments, tels que des soupapes, des collecteurs, des sondes de gaz, des catalyseurs, des filtres ou analogues, qui présentent des tenues thermiques qui limitent une plage d'utilisation de ces derniers. Typiquement, une température T des gaz d'échappement 5 excédant 950°C à 1000°C est susceptible de provoquer des dommages irréversibles des éléments constitutifs du système de post-traitement 8 et/ou du moteur à combustion interne 4.

Pour éviter un tel endommagement, il est connu d'enrichir en carburant un mélange d'air/carburant admis à l'intérieur du moteur à combustion interne 4, c'est-à-dire que le mélange air/carburant admis dans le moteur n'est alors plus stoechiométrique mais en excès de carburant.

Pour caractériser la richesse du mélange air/carburant, différents coefficients peuvent être pris en compte, parmi le coefficient de richesse théorique R :

$$R = \frac{(M'_{essence}/M'_{air})_{ré\,el}}{(M_{essence}/M_{air})_{stoech.}}$$

avec :

M'$_{essence}$ masse d'essence réellement introduite,
M'$_{air}$ masse d'air réellement introduite,
M$_{essence}$ masse d'essence nécessaire pour une combustion stoechiométrique,
M$_{air}$ masse d'air nécessaire pour une combustion stoechiométrique.

Lors des phases d'enrichissement permettant la protection des composants, le coefficient de richesse R du mélange air/carburant est susceptible d'atteindre, voire de dépasser, une valeur de 1,2.

Une telle valeur provoque un abaissement de la température T des gaz d'échappement en dessous de 950 °C, i.e. la température de protection des composants.

D'autres types de définition de coefficients de la richesse d'un mélange air/carburant existent et sont rappelés en fin de description.

Il est aussi connu que l'enrichissement en carburant du mélange air/carburant permet d'obtenir une puissance accrue pour une accélération du véhicule par exemple.

Les surenrichissements exigés par ces situations d'enrichissement génèrent des surrichesses dans les systèmes de post-traitement essence qui sont susceptibles de dégrader significativement leur efficacité de conversion. En effet, elles rendent les gaz d'échappement 2 réducteurs, puisque riches en hydrocarbures imbrûlés HC et en monoxyde de carbone CO.

Des surémissions d'hydrocarbures imbrûlés peuvent ainsi apparaître en aval des catalyseurs trois-voies classiques et donc à la canule échappement.

L'invention consiste à la fois d'intégrer dans cette ligne d'échappement un dispositif catalytique additionnel (catalyseur ou un système de filtration imprégné), dédié à la réaction d'élimination des HC imbrûlés en milieu fortement réducteur et de disposer d'un thermomanagement de ce dispositif catalytique additionnel adapté.

Le dispositif additionnel 11 est préférentiellement placé à l'intérieur de la ligne d'échappement 4 en aval du dispositif principal 5 selon un sens d'écoulement 8 des gaz d'échappement 2 à l'intérieur de la ligne d'échappement 4. L'intérêt d'une telle configuration est de permettre un amorçage des réactions de conversion qui ont lieu dans le dispositif principal 9 lorsque le coefficient de richesse R est proche de 1. La configuration inverse augmente en effet un temps de mise en action du dispositif principal et laisse passer en conséquence plus de composants nocifs vers l'environnement extérieur 6.

Le dispositif catalytique additionnel 11 est un Catalyseur Vapo-HC, c'est-à-dire un catalyseur dédié au traitement des émissions d'HC en mélange riche par vaporéformage (cf. réaction (4) ci-après)

La réaction de « vaporéformage des HC » qui transforme en milieu réducteur (i.e. en absence d'O$_2$) les hydrocarbures (CxHy) en dioxyde de carbone (CO$_2$) et en hydrogène (H$_2$) grâce à la vapeur d'eau qui est réduite en H$_2$ :

(4) $C_xH_y + 2xH_2O \rightarrow xCO_2 + (2x+y/2)H_2$

Cette réaction se décompose en fait en deux réactions : celle qui conduit de l'hydrocarbure au monoxyde de carbone (4.1) puis celle qui convertit le monoxyde de carbone ainsi formé en CO2 (4.2) :

i.

$$C_xH_y+xH_2O \rightarrow xCO+(x+y/2)H_2 \qquad (4.1)$$

ii.

$$CO+H_2O \rightleftarrows CO_2+H_2 \qquad (4.2)$$

La seconde réaction (4.2) n'est ni plus ni moins que la réaction dite « du gaz à l'eau ».

Le vaporéformage des HC n'apparaît qu'à des températures supérieures à 350 - 400 °C, alors que la réaction du « gaz à l'eau » démarre aux environs de 250 °C. C'est pour cette dernière raison que l'on peut considérer que $CO_2$ est un produit primaire de la réaction globale.

Le catalyseur le plus efficace en vaporéformage est le rhodium. Mais il n'est pas le plus actif en conversion du « gaz à l'eau », le platine lui étant préféré. Mais le vaporéformage est moins sensible à la nature du catalyseur : un ordre de grandeur seulement sépare l'activité du rhodium de celle du platine.

En revanche, le type de support joue beaucoup sur l'efficacité de la réaction de vaporéformage comme dans le cas du « gaz à l'eau ».

La cérine (CeOx), active en conversion du « gaz à l'eau » (4.2), joue donc un rôle promoteur dans le vaporéformage des HC. Le rhodium a tendance à réaliser la réaction (4.1) sans pour autant convertir rapidement le monoxyde de carbone produit, en dioxyde de carbone conformément à la réaction 4.2, puisque le rhodium n'est pas le plus actif pour cette réaction.

Le risque est d'obtenir une accumulation de CO sur la surface du rhodium, qui entraîne une inhibition de la réaction primaire.

Pour éviter cet effet non désirable, on associe préférentiellement le rhodium au platine.

Le catalyseur bimétallique Pt-Rh/Al$_2$O$_3$-CeOx apparaît donc comme étant le meilleur catalyseur de vaporéformage des hydrocarbures global (réactions 4.1 et 4.2) alors qu'un catalyseur à base de Platine seul (avec son support réductible) aurait été retenu pour la seule réaction du « gaz à l'eau ».

Mais il est possible de déposer le bi-métallique Pt-Rh voire le monométallique à base de Rh sur un autre support réductible que l'oxyde de cérium tel que $TiO_2$ ou $SnO_2$. Le support sera à adapter en fonction des exigences techniques voire du compromis technico-économique à atteindre.

En défaut d'oxygène (et uniquement en son absence), et donc lorsque le mélange air/carburant est en excès de carburant, le vaporéformage prend le relais de l'oxydation directe des HC par $O_2$ et il est impératif de ne pas former de monoxyde de carbone par cette réaction. On conçoit dès lors bien mieux l'importance de la réaction du gaz à l'eau.

Le mécanisme que l'on retrouve généralement dans la littérature est un mécanisme bi-fonctionnel associant, comme dans le cas de la réaction du gaz à l'eau, l'activation des HC par le métal et l'activation de l'eau par le support :

adsorption dissociative de l'hydrocarbure (= propane) :

i.

$$C_3H_8+{}^* \rightarrow C_3H_7{}^*\text{-H} \qquad (4a1)$$

ii.

$$C_3H_7{}^*\text{-H}+{}^* \rightarrow CH_x{}^*+C_2H_y{}^* \qquad (4a2)$$

adsorption dissociative de l'eau :

i.

$$H_2O+S\text{-}O\text{-}S \rightarrow 2(OH\text{-}S) \qquad (4b)$$

transfert et réaction d'un hydroxyle du support avec un groupement CHx :

i.

$$CH_x{}^*+2(OH\text{-}S) \rightarrow (CO,CO_2,H_2)+{}^*+S\text{-}O\text{-}S \qquad (4c)$$

*, désignant un site métallique et S un site du support.

Et la réaction se poursuit avec la décomposition de l'espèce à deux carbones avant de terminer par la réaction (4c).

L'activité en vaporéformage, principalement due au rhodium, n'apparaît que lorsque l'$O_2$ est totalement consommé.

Par conséquent, dans le cas où la réaction d'oxydation est difficile, cas typique de l'oxydation des n-alcanes, la conversion de l'hydrocarbure par vaporéformage intervient, en présence d'$O_2$ dans le mélange, à plus haute température.

L'avantage des surenrichissements moteur qui nous concernent ici au premier chef est qu'ils ne génèrent à l'échappement que très peu d'oxygène (voire pas du tout).

Le vaporéformage des HC peut donc intervenir à plus basse température.

Bien évidemment, la nature même des HC à traiter va influer très fortement sur l'amorçage de cette réaction.

Un autre avantage des surenrichissements moteur est qu'ils placent le catalyseur de vaporéformage dans les meilleures conditions puisqu'il est d'autant plus actif qu'il a été réduit. Même si les conditions avant le surenrichissement étaient pauvres (excès d'O2), la réductibilité du support est telle que le catalyseur sera instantanément (ou presque) réduit et donc très efficace pour traiter les fortes émissions d'HC.

Enfin, les surenrichissements moteur sont liés le plus souvent à des niveaux thermiques élevés, ce qui est favorable à la réaction de vaporéformage puisque cette dernière intervient à des températures supérieures à 400 °C.

Notons qu'à la différence de la réaction du « gaz à l'eau », la réaction de vaporéformage des HC est irréversible et ne nécessite pas de limiter la température pour atteindre le rendement maximal de conversion des HC.

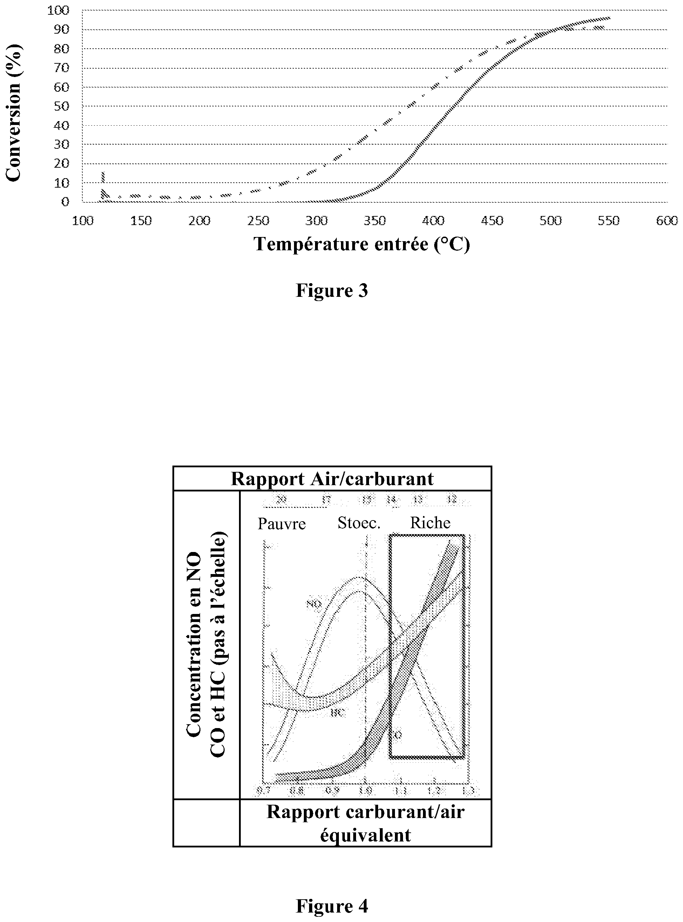

Une efficacité totale de conversion des HC est classiquement atteinte à partir de 550 - 650°C conformément au graphique de la figure 3 représentant en traits continus la conversion des HC et en traits interrompus celle du CO. Ce graphique a été obtenu à partir d'essais réalisés au banc gaz synthétiques, moyen permettant de mesurer l'efficacité d'un catalyseur à convertir les polluants dans des conditions de gaz et de température représentatives des conditions véhicule. Il montre la capacité d'un catalyseur « trois-voies » à convertir les hydrocarbures (en l'occurrence C3H6) mais aussi le monoxyde de carbone en absence d'oxygène dans les gaz c'est-à-dire en conditions très réductrices et à une température d'efficacité optimale comprise entre 550 et 650 °C. Seules les réactions de vaporéformage des HC et de « gaz à l'eau » interviennent dans ces conditions typées surenrichissement moteur et peuvent expliquer la conversion des HC ainsi que celle du monoxyde de carbone.

Mais cette efficacité dépend de l'état de vieillissement du catalyseur qui induit une augmentation de la température d'amorçage des réactions catalytiques et plus particulièrement celle du gaz à l'eau (4.2).

En effet, même s'il n'existe pas de température maximale à ne pas dépasser pour le vaporéformage sous peine de réduire le rendement catalytique de la réaction à l'instar du « gaz à l'eau » (limitée à 450 voire 500 °C°), il est tout de même utile de caractériser au banc gaz synthétique l'ensemble catalytique 8 et en particulier le dispositif additionnel de conversion des HC en milieu riche 11 afin de disposer en fonction de son état de vieillissement du niveau thermique minimal pour assurer une bonne efficacité de conversion des HC imbrûlé lors des phases de surenrichissement du moteur.

Typiquement, la température minimale pourrait être de 400 °C si le dispositif additionnel 11 est neuf (type essai d'homologation) ou 600 °C s'il est vieilli à la durabilité réglementaire (160 000 km).

Ce type d'essai au banc gaz synthétiques est facile à réaliser et permet de construire à partir d'une série d'essais une base de données en fonction de la nature du catalyseur considéré ainsi que de son état de vieillissement et des conditions opératoires qui définit l'intervalle de température dans lequel le dispositif catalytique principal 9 doit se trouver pour avoir la meilleure efficacité.

Cette base de données peut ensuite servir à l'optimisation du thermomanagement de la ligne d'échappement. En effet, cette base de données ainsi constituée peut rejoindre une mémoire du contrôle-moteur pour aider à la gestion thermique de la ligne d'échappement 4 lors des enrichissements moteur. Un travail sur l'architecture de la ligne d'échappement 4 peut s'avérer nécessaire. Par exemple, on peut aménager une distance entre le dispositif additionnel 11 et le dispositif principal 9 plus ou moins importante en fonction de la thermique requise pour un fonctionnement optimal du dispositif additionnel.

Ainsi à chaque sollicitation du conducteur (demande de puissance lors d'une forte accélération, par exemple) ou pour des besoins de protection composants, le contrôle moteur pourrait vérifier via un ou des thermocouples, que la thermique de l'ensemble catalytique 8 ou du dispositif additionnel uniquement 11 est suffisante pour traiter efficacement les surémissions d'HC.

Dans la négative, il pourrait lancer une stratégie de montée en température permettant à l'ensemble catalytique 8 ou au dispositif additionnel 11 d'atteindre au plus vite la température cible ou température d'efficacité optimale. Le système serait ainsi bouclé thermiquement, permettant une efficacité en dépollution nettement accrue.

Trois modes de réalisation du dispositif additionnel 11 sont prévus :

### A) Architecture 1 : Moteur + Catalyseur TWC + Catalyseur Vapo-HC, figure 6 :

Sur la figure 6, le dispositif catalytique principal 9 est interposé entre le moteur à combustion interne 4 et le dispositif catalytique additionnel, en étant placé à distance de l'un et de l'autre.

### B) Architecture 2 : Moteur + Catalyseur monobloc (TWC + Vapo-HC), figure 7

Sur la figure 7, le dispositif catalytique principal TWC 9 et le dispositif catalytique additionnel (Vapo-HC) 11 sont associés en un ensemble catalytique 8 qui est monobloc et solidaire, le dispositif principal 9 formant une entrée des gaz d'échappement à l'intérieur de l'ensemble catalytique 8 et qui réalise les réactions de conversion des polluants lorsque le mélange air/carburant est stoechiométrique (« trois-voies »)et le dispositif additionnel 11 formant une sortie des gaz d'échappement 5 à l'intérieur de l'ensemble catalytique 8 et qui réalise les réactions de vaporéformage des HC (i.e. de conversion des HC par la vapeur d'eau) lorsque le mélange air/carburant est en excès de carburant. L'ensemble catalytique forme alors un catalyseur zoné, i.e. un catalyseur ayant pour spécificité d'offrir sur un même support différentes fonctions bien distinctes.

En effet, en entrée de l'ensemble catalytique 8, on retrouve le dispositif principal 9 qui convertit les composants nocifs lorsque le coefficient de richesse R est proche de 1. On retrouve ensuite dans cet ensemble catalytique 8 le dispositif additionnel 11 qui est donc situé en aval du dispositif principal 9 selon le sens d'écoulement des gaz d'échappement à l'intérieur de la ligne d'échappement 7 et qui convertit, lorsque le coefficient de richesse R est supérieur à 1, les HC en dioxyde de carbone ($CO_2$) et en hydrogène ($H_2$) grâce à la vapeur d'eau qui est réduite en $H_2$ en milieu réducteur par vaporéformage. Cette configuration est préférable à la configuration inverse en raison de l'intervalle de température à cibler. Cette configuration offre l'avantage de sa compacité.

### C) Architecture 3 : Moteur + catalyseur TWC + filtre à particules essence imprégné Vapo-HC, figure 8

Sur la figure 8, le dispositif additionnel 11 comprend un filtre à particules 12 imprégné d'une enduction qui convertit les HC en mélange riche par réaction de vaporéformage des HC.

Dans les architectures 1, 2 et 3, les enductions du catalyseur Vapo-HC 11, de la zone Vapo-HC 11 du catalyseur TWC/Vapo-HC et du filtre à particules 12 peuvent être proches voires identiques.

L'architecture 2 de la figure 7 où un même catalyseur comporte deux zones bien distinctes, l'une permettant de réaliser les réactions de post-traitement pour un coefficient de richesse égal à 1 et l'autre permettant de traiter notamment les fortes émissions d'HC pour un coefficient de richesse supérieur à 1 serait la solution la plus favorable du point de vue de la thermique.

Elle présente, en effet, moins d'inertie thermique que l'architecture 3 de la figure 8 où l'imprégnation assurant le vaporéformage des HC est positionnée sur et dans les parois du filtre à particules en aval du catalyseur « trois-voies » 9.

Le fait que cette réaction de vaporéformage soit légèrement endothermique (+ 125kJ/mol dans le cas du vaporéformage du propylène, par exemple) peut également être un avantage pour « protéger » en partie le système de dépollution des thermiques trop élevées. Typiquement, l'architecture 3 favoriserait l'utilisation de matériaux moins résistants thermiquement et donc moins chers (média en cordiérite versus carbure de silicium). De même dans le cas de l'architecture 2 du catalyseur à deux zones distinctes, cette réaction endothermique permettrait d'atténuer dans le catalyseur les thermiques élevées en sortie moteur lors des surenrichissements.

Enfin, le fait d'ajouter à l'enduction du filtre à particules de la figure 8 (architecture 3) des métaux précieux et notamment du platine permettra d'aider à la régénération des particules et à l'oxydation des émissions CO/HC qui auraient échappé au catalyseur « trois-voies » situé en amont du filtre (typiquement dans le cas des forts débits voire à froid si le filtre possède une résistance chauffante permettant d'accélérer l'amorçage des réactions d'oxydation).

L'architecture 3 avec un filtre à particules métallique imprégné d'une enduction dédiée au vaporéformage des HC est plus appropriée à l'hybridation essence (HY) qui est susceptible de générer davantage de particules du fait des fréquents démarrages du moteur thermique, que les moteurs conventionnels, tout en présentant des risques similaires de surenrichissement.

Il est possible d'adapter l'ensemble catalytique ci-dessus décrit pour traiter en outre les surémissions de monoxyde de carbone (CO). En effet, il est possible de traiter ces surémissions de CO liées aux surenrichissements par un dispositif catalytique adapté (non illustré) ayant une formulation de phase active différente de celle du dispositif additionnel traitant les HC en milieu réducteur. Cette phase active sera constitutive d'un catalyseur supplémentaire ou déposée sur un filtre à particules. Elle pourra être formée de Platine sur Cérium dopé ou sur tout autre support réductible.

Ce type de phase active devra permettre de réaliser la réaction de « gaz à l'eau » qui conduit à l'élimination du CO par la vapeur d'eau avec une production significative d'$H_2$. Cette réaction étant réversible, il faudra cependant adapter la température que verra le dispositif supplémentaire pour optimiser son rendement : 250 < T < 500 °C (en fonction de son état). En effet, au-delà d'une certaine température, l'efficacité catalytique diminue de nouveau après avoir atteint un maximum.

Il est bien évidemment possible d'ajouter cette fonction « gaz à l'eau » à la fonction « vaporéformage des HC » du dispositif additionnel 11 pour obtenir une solution qui traitera à la fois les surémissions d'HC et celles de CO avec toutefois une fenêtre de température à adapter au besoin car l'amorçage de ces deux réactions n'intervient pas au même moment.

En effet, la réaction dite « du gaz à l'eau » démarre à plus basse température dès 200 - 250°C pour atteindre un maximum de rendement aux environs de 450 - 500°C alors qu'il faut atteindre 300 à 350°C pour que le vaporéformage des HC commence et atteigne son maximum au-delà de 550 à 650°C.

L'idéal dans ce cas est d'avoir deux systèmes distincts avec des phases actives optimisées pour chacune des réactions :

a) un dispositif additionnel dit « haute température » (non illustré) 11 pour la réaction de vaporéformage des HC dont la thermique sera contrôlée par l'unité de gestion et maintenue supérieure à 350°C et adaptée en fonction de son état de vieillissement, tel que décrit ci-dessus et

b) un dispositif additionnel dit « basse température » pour la réaction du « gaz à l'eau » 4.2 dont la température sera contrôlée par l'unité de gestion pour être comprise entre 250 °C et 500 °C (plage de valeurs pouvant être affinée avec des essais de caractérisation cinétique au banc gaz synthétiques en fonction de l'état de vieillissement de ce dispositif).

Ce dispositif additionnel dit « basse température » pourra comprendre un premier catalyseur dédié au traitement d'émissions de monoxyde de carbone CO en mélange riche, c'est-à-dire lorsque le coefficient de richesse R est supérieur à 1, notamment de l'ordre de 1,2.

Plus précisément, le dispositif additionnel dit basse température 6 comprend un premier composant C1 comprenant de l'oxyde de cérium $CeO_2$ qui permet à partir d'une réaction de déstockage d'oxygène [5] de libérer de l'oxygène, notamment en milieu réducteur, pour permettre une oxydation du monoxyde de carbone CO et des hydrocarbures imbrûlés :

$$2\ CeO_2 \rightarrow Ce_2O_3 + \tfrac{1}{2}\ O_2 \qquad\qquad [5]$$

Il comprend également un deuxième composant C2 comprenant du platine Pt qui favorise également la réaction du gaz à l'eau 4.2. En substitution et/ou en complément du platine Pt, le dispositif est susceptible de comprendre du rhodium Rh qui favorise également la réaction du gaz à l'eau [4.2], mais d'une manière moins efficace que le platine Pt (couramment d'un facteur deux).

Selon d'autres variantes de réalisation, le dispositif additionnel basse température est susceptible de comporter un troisième composant C3 en substitution et/ou en complément du deuxième composant C2, tel que :

- de l'or Au déposé sur des oxydes de titane, de zirconium ou de fer,
- du cobalt Co déposé sur de l'alumine,
- du ruthénium Ru déposé sur de la cérine $(CeO_x)$ ou un mélange fer-cérine $(Fe\text{-}CeO_x)$,
- du cuivre Cu sur de l'oxyde de titane.

Selon d'autres variantes de réalisation, le dispositif additionnel basse température 6 comprend un catalyseur métallique, tel qu'un catalyseur Cu/Zn pour une température T des gaz d'échappement 5 basse, telle que de l'ordre de 600 °C, ou bien tel qu'un catalyseur Fe/Cr plus efficace à une température T des gaz d'échappement 5 plus haute, telle que de l'ordre de 900 °C. Pour de très hautes températures T des gaz d'échappement 2, typiquement supérieures à 1 000 °C, le catalyseur métallique comprend par exemple du platine Pt et/ou du rhodium Rh qui sont plus adaptés pour résister à des phénomènes de frittage et/ou de volatilisation.

Le système tel que décrit ci-dessus présente différents avantages parmi lesquels :

- le respect des normes de rejet en vigueur et à venir, sans nuire aux performances du moteur,
- une augmentation de la durée de vie du système de post-traitement du fait du caractère endotherme de la réaction de vaporéformage qui va donc consommer des calories plutôt que d'en produire.

Richesse d'un mélange gazeux - Autres coefficients que "R"

1) le coefficient prenant en compte l'ensemble des espèces oxydantes et réductrices du mélange, il s'agit d'une richesse « gaz » et non « moteur » :

$$R_1 = \frac{2[CO_2] + [H_2O] + 2[CO] + [H_2] + (2x + \frac{y}{2})[C_xH_y]}{2[CO_2] + [H_2O] + 2[O_2] + [CO] + [NO]}$$

Et

$$R_2 \simeq 1 + \frac{[CO] + [H_2] + (2x + \frac{y}{2})[C_xH_y] - [NO] - 2[O_2]}{2[CO_2] + [H_2O]}$$

avec [] qui représente la fraction volumique d'une espèce gazeuse.

$R_1$ est la richesse réelle tandis que $R_2$ calculée grâce à la théorie des développements limités à partir de $R_1$ en constitue une formule approchée.

2) richesse cinq gaz

Il existe également un calcul de richesse plus simple que la richesse "complète" et qui ne tient compte ni de l'eau ni du dioxyde de carbone. Cette richesse "fictive" est également appelée richesse "cinq gaz" et s'écrit :

$$R_3 = 1 + 0,02545 \left([CO] + [H2] + (2x + y/2 - z)[CxHyOz] - [NO] - 2[O2]\right)$$

$R_3$ est davantage utilisée par les "motoristes" qui la calculent généralement à partir de l'analyse des polluants sur "banc moteur".

3) rapport stoechiométrique

Les "chimistes" préfèrent, quant à eux, parler en termes de rapport stoechiométriques, S plutôt qu'en termes de richesse pour définir un ménage gazeux surtout lorsque le gaz d'écheppement est reconstitué à partir de gaz purs.

$$S = \frac{[H2] + [CO] + (2x + y/2 - z)[CxHyOz]}{2[O2] + [NO]}$$

Le mélange est dit "stoechiométrique" quand S= 1, pauvre quand S < 1 et riche quand S > 1.

4) rapport A/F

Les caractéristiques redox d'un mélange gazeux peuvent également être identifiées par le rapport air/essence ou air/fuel (A/F) :

$$A/F = \frac{14.63}{1 + 0.02545([CO] + [H_2] + 3n[C_nH_{2n}] + (3n + 1)[C_nH_{2n+2}] - 2[O_2] - [NO])}$$

Quand A/F = 14.63, le mélange est dit "stoechiométrique"; quand A/F est inférieur à cette valeur, le mélange est dit riche et inversement, si A/F est supérieur à 14.63. Ce rapport redox est très souvent utilisé par les "motoristes".

**Revendications**

1. Système de post traitement de gaz d'échappement destiné à équiper une ligne d'échappement d'un moteur à combustion interne dont est pourvu un véhicule automobile, le moteur du véhicule étant susceptible d'admettre un mélange air/carburant autour de la stoechiométrie ou enrichi en carburant, le système comprenant :

   - un dispositif catalytique principal (9) de conversion des polluants émis par le moteur suite à la combustion d'un mélange air/carburant autour de la stoechiométrie,
   - un dispositif catalytique additionnel (11) de conversion des hydrocarbures (HC) imbrûlés suite à la combustion d'un mélange air/carburant enrichi en carburant,

   **caractérisé en ce qu'**il comprend en outre :

   - une unité de gestion de la température du dispositif additionnel (11) en fonction de son état de vieillissement, portant la température de ce dispositif additionnel à une température égale ou supérieure à une température d'efficacité optimale fonction de son état de vieillissement.

2. Système selon la revendication 1, dans lequel le dispositif additionnel (11) et le dispositif principal (9) sont formés respectivement par deux catalyseurs distincts l'un de l'autre comprenant respectivement des phases actives catalytiques différentes l'une de l'autre.

3. Système selon la revendication 1, dans lequel le dispositif additionnel (11) et le dispositif principal (9) sont respectivement formés par deux zones distinctes d'un même catalyseur monobloc et solidaire (15) comprenant respectivement des phases actives catalytiques différentes l'une de l'autre.

4. Système selon la revendication 1, dans lequel le dispositif additionnel (11) comprend une phase active catalytique enduite sur un filtre à particules.

5. Système selon l'une des revendications 2 à 4, dans lequel la phase active du dispositif additionnel comprend un composant comprenant du rhodium ou un bi-métallique Pt-Rh sur un support réductible.

6. Système selon l'une des revendications 2 à 4, dans lequel la phase active du dispositif additionnel comprend un composant $Pt-Rh/Al_2O_3-CeOx$.

7. Système selon l'une des revendications précédentes, dans lequel l'unité de gestion de la température du dispositif additionnel (11) comprend des outils de mesure de la température courante du dispositif additionnel (11), une base de données mettant en correspondance l'état de vieillissement du dispositif additionnel (11) avec la température d'efficacité optimale, et une gestion thermique de la ligne d'échappement du véhicule apte à augmenter la température courante du dispositif additionnel si cette température courante est inférieure à la température d'efficacité optimale.

8. Système selon l'une des revendications précédentes, comprenant un deuxième dispositif catalytique additionnel de conversion du monoxyde de carbone.

9. Ligne d'échappement (7) équipant un moteur à combustion interne (4) dont est pourvu un véhicule automobile, comprenant un système de post-traitement (5) selon l'une des revendications précédentes, le dispositif additionnel (11) de ce système étant disposé en aval du dispositif principal (9) selon le sens de cheminement des gaz émis par le moteur vers la sortie de la ligne d'échappement.

10. Véhicule automobile comprenant un moteur à combustion interne de type essence susceptible d'admettre un mélange air/carburant autour de la stoechiométrie ou enrichi en carburant, le moteur formant l'unique moyen de motorisation du véhicule, ou un moyen de motorisation complémentaire d'un moteur autre que thermique, dans lequel les gaz émis par le moteur suite à la combustion du mélange air/carburant sont véhiculés vers l'extérieur à travers la ligne d'échappement selon la revendication 9.

**Patentansprüche**

1. System zur Abgasnachbehandlung, das dazu bestimmt ist, einen Abgasstrang einer Brennkraftmaschine, mit der ein Kraftfahrzeug versehen ist, auszustatten, wobei der Motor des Fahrzeugs ein Luft-Kraftstoffgemisch um die Stöchiometrie oder mit Kraftstoff angereichert ansaugen kann, wobei das System Folgendes umfasst:

   - eine katalytische Hauptvorrichtung (9) zum Umwandeln der Schadstoffe, die von der Maschine im Anschluss an die Verbrennung eines Luft-Kraftstoffgemischs um die Stöchiometrie abgegeben werden,
   - eine zusätzliche katalytische Vorrichtung (11) zum Umwandeln der nicht verbrannten Kohlenwasserstoffe (HC) im Anschluss an die Verbrennung eines Luft-Kraftstoffgemischs, das mit Kraftstoff angereichert ist, **dadurch gekennzeichnet, dass** es ferner Folgendes umfasst:

   - eine Verwaltungseinheit der Temperatur der zusätzlichen Vorrichtung (11) in Abhängigkeit von ihrem Alterungszustand, die die Temperatur dieser zusätzlichen Vorrichtung auf eine Temperatur gleich oder höher als die Temperatur optimaler Effizienz in Abhängigkeit von ihrem Alterungszustand anhebt.

2. System nach Anspruch 1, wobei die zusätzliche Vorrichtung (11) und die Hauptvorrichtung (9) jeweils aus zwei separaten Katalysatoren gebildet sind, die jeweils unterschiedliche aktive katalytische Phasen voneinander umfassen.

3. System nach Anspruch 1, wobei die zusätzliche Vorrichtung (11) und die Hauptvorrichtung (9) jeweils von zwei getrennten Zonen ein und desselben einteiligen und fest verbundenen Katalysators (15) gebildet sind, die jeweils unterschiedliche aktive katalytische Phasen voneinander umfassen.

4. System nach Anspruch 1, wobei die zusätzliche Vorrichtung (11) eine aktive katalytische Phase, die auf einem Partikelfilter a ist, umfasst.

5. System nach einem der Ansprüche 2 bis 4, wobei die aktive Phase der zusätzlichen Vorrichtung einen Bestandteil umfasst, der Rhodium oder ein Bimetall Pt-Rh auf einem reduzierten Träger umfasst.

6. System nach einem der Ansprüche 2 bis 4, wobei die aktive Phase der zusätzlichen Vorrichtung eine Komponente Pt-Rh/$Al_2O_3$-CeOx umfasst.

7. System nach einem der vorhergehenden Ansprüche, wobei die Verwaltungseinheit der Temperatur der zusätzlichen Vorrichtung (11) Testtools der aktuellen Temperatur der zusätzlichen Vorrichtung (11) umfasst, wobei eine Datenbank den Alterungszustand der zusätzlichen Vorrichtung (11) mit der Temperatur optimaler Effizienz vergleicht, und eine Wärmeverwaltung des Abgasstrangs des Fahrzeugs, die geeignet ist, die aktuelle Temperatur der zusätzlichen Vorrichtung zu erhöhen, falls diese aktuelle Temperatur niedriger ist als die Temperatur optimaler Effizienz.

8. System nach einem der vorhergehenden Ansprüche, das eine zweite zusätzliche katalytische Vorrichtung zur Umwandlung des Kohlenstoffmonoxids umfasst.

9. Abgasstrang (7), der eine Brennkraftmaschine (4) ausstattet, mit der ein Kraftfahrzeug versehen ist, die ein Nachbehandlungssystem (5) nach einem der vorhergehenden Ansprüche umfasst, wobei die zusätzliche Vorrichtung (11) dieses Systems stromabwärts der Hauptvorrichtung (9) entlang der Transportrichtung der Gase angeordnet ist, die von der Maschine zu dem Ausgang des Abgasstrangs abgegeben werden.

10. Kraftfahrzeug, das eine Brennkraftmaschine des Benzintyps umfasst, die ein Luft-Kraftstoffgemisch um die Stöchiometrie oder mit Kraftstoff angereichert ansaugen kann, wobei die Maschine das einzige Antriebsmittel des Fahrzeugs bildet, oder ein ergänzendes Antriebsmittel einer Maschine, die keine Brennkraftmaschine ist, wobei die von der Maschine im Anschluss an die Verbrennung des Luft-Kraftstoffgemischs abgegebenen Gase durch den Abgasstrang nach Anspruch 9 nach außen transportiert werden.

**Claims**

1. A system for the post-treatment of exhaust gases intended to be fitted to an exhaust line of an internal combustion engine equipping a motor vehicle, the engine of the vehicle being able to admit an air/fuel mixture near stoichiometry or enriched with fuel, the system including:

- a main catalytic device (9) for converting pollutants emitted by the engine following the combustion of an air/fuel mixture near stoichiometry,
- an additional catalytic device (11) for converting unburnt hydrocarbons (HC) following the combustion of an air/fuel mixture enriched with fuel,

**characterized in that** it further includes:

- a unit for managing the temperature of the additional device (11) as a function of the ageing status thereof, increasing the temperature of this additional device to a temperature equal to or greater than an optimum efficiency temperature that is a function of the ageing status thereof.

2. The system according to Claim 1, in which the additional device (11) and the main device (9) are formed respectively by two catalyzers which are distinct from one another, including respectively active catalytic phases that are different from one another.

3. The system according to Claim 1, in which the additional device (11) and the main device (9) are respectively formed by two distinct zones of a same one-piece and integral catalyzer (15) including respectively active catalytic phases that are different from one another.

4. The system according to Claim 1, in which the additional device (11) includes an active catalytic phase coated on a particle filter.

5. The system according to one of Claims 2 to 4, in which the active phase of the additional device includes a component including rhodium or a Pt-Rh bimetallic on a reducible support.

6. The system according to one of Claims 2 to 4, in which the active phase of the additional device includes a Pt-Rh/Al$_2$O$_3$-CeOx component.

7. The system according to one of the preceding claims, in which the temperature management unit of the additional device (11) includes tools for measurement of the current temperature of the additional device (11), a database matching the ageing status of the additional device (11) with the optimum efficiency temperature, and a thermal management of the exhaust line of the vehicle able to increase the current temperature of the additional device if this current temperature is less than the optimum efficiency temperature.

8. The system according to one of the preceding claims, including a second additional catalytic device for conversion of carbon monoxide.

9. An exhaust line (7) equipping an internal combustion engine (4) with which a motor vehicle is provided, including a post-treatment system (5) according to one of the preceding claims, the additional device (11) of this system being disposed downstream of the main device (9) in the direction of routing of the gases emitted by the engine towards the outlet of the exhaust line.

10. A motor vehicle including an internal combustion engine of the petrol type, capable of admitting an air/fuel mixture near stoichiometry or enriched with fuel, the engine forming the sole means of motorisation of the vehicle, or a complementary means of motorisation of an engine other than thermal, in which the gases emitted by the engine following the combustion of the air/fuel mixture are conveyed toward the exterior through the exhaust line according to Claim 9.

100

Taux de conversion (%)

NOx

1

HC

CO

Pauvre          1          Riche

**Richesse en carburant du mélange
Air/carburant**

**Figure 1**

2

27 kW

3

Puissance kW

100

80

60

40

20

0

500   1500   2500   3500   4500   5500   6500

**Regime (rpm)**

**Figure 2**

**Figure 3**

**Figure 4**

| Remplissage | Régime (rpm) | | | | | | | | | | | | | | | |
|---|---|---|---|---|---|---|---|---|---|---|---|---|---|---|---|---|
| | 748 | 999 | 1249 | 1499 | 1749 | 1999 | 2249 | 2749 | 3249 | 3749 | 4000 | 4500 | 5000 | 5500 | 6000 | 6500 |
| 0,10 | 1,00 | | | | | | | | | | | | | | | |
| 0,15 | 1,00 | 1,00 | 1,00 | 1,00 | 1,00 | 1,00 | 1,00 | 1,00 | 1,00 | 1,00 | 1,00 | 1,00 | | | | |
| 0,20 | 1,00 | 1,00 | 1,00 | 1,00 | 1,00 | 1,00 | 1,00 | 1,00 | 1,00 | 1,00 | 1,00 | 1,00 | 1,00 | 1,00 | 1,00 | 1,00 |
| 0,30 | 1,00 | 1,00 | 1,00 | 1,00 | 1,00 | 1,00 | 1,00 | 1,00 | 1,00 | 1,00 | 1,00 | 1,00 | 1,00 | 1,00 | 1,00 | 1,00 |
| 0,40 | 1,00 | 1,00 | 1,00 | 1,00 | 1,00 | 1,00 | 1,00 | 1,00 | 1,00 | 1,00 | 1,00 | 1,00 | 1,00 | 1,00 | 1,00 | 1,00 |
| 0,50 | 1,00 | 1,00 | 1,00 | 1,00 | 1,00 | 1,00 | 1,00 | 1,00 | 1,00 | 1,00 | 1,00 | 1,00 | 1,00 | 1,00 | 1,00 | 1,00 |
| 0,60 | 1,00 | 1,00 | 1,00 | 1,00 | 1,00 | 1,00 | 1,00 | 1,00 | 1,00 | 1,00 | 1,00 | 1,00 | 1,00 | 1,00 | 1,00 | 1,00 |
| 0,80 | | 1,00 | 1,00 | 1,00 | 1,00 | 1,00 | 1,00 | 1,00 | 1,00 | 1,00 | 1,00 | 1,00 | 1,00 | 1,00 | 1,03 | 1,03 |
| 0,90 | | 1,00 | 1,00 | 1,00 | 1,00 | 1,00 | 1,00 | 1,00 | 1,00 | 1,00 | 1,00 | 1,00 | 1,00 | 1,01 | 1,04 | 1,06 |
| 1,00 | | 1,00 | 1,00 | 1,00 | 1,00 | 1,00 | 1,00 | 1,00 | 1,00 | 1,00 | 1,00 | 1,00 | 1,00 | 1,03 | 1,06 | 1,12 |
| 1,10 | | 1,00 | 1,00 | 1,00 | 1,00 | 1,00 | 1,00 | 1,00 | 1,00 | 1,00 | 1,00 | 1,02 | 1,04 | 1,05 | 1,09 | 1,14 |
| 1,20 | | | 1,00 | 1,00 | 1,00 | 1,00 | 1,00 | 1,00 | 1,00 | 1,00 | 1,01 | 1,03 | 1,04 | 1,09 | 1,13 | |
| 1,30 | | | 1,00 | 1,00 | 1,00 | 1,00 | 1,00 | 1,00 | 1,00 | 1,01 | 1,02 | 1,04 | 1,07 | 1,11 | | |
| 1,40 | | | 1,00 | 1,00 | 1,00 | 1,00 | 1,00 | 1,00 | 1,00 | 1,02 | 1,03 | | | | | |
| 1,50 | | | | 1,00 | 1,00 | 1,00 | | | | | | | | | | |
| 1,60 | | | | 1,00 | | | | | | | | | | | | |

Figure 5

**Figure 6**

-6-

**Figure 7**

-6-

**Figure 8**

**EP 2 941 549 B1**

**RÉFÉRENCES CITÉES DANS LA DESCRIPTION**

**Documents brevets cités dans la description**

- EP 2072774 A